# FASCICULE DE BREVET EUROPEEN

(11) **EP 0 493 228 B1**
(45) Date de publication et mention de la délivrance du brevet: **05.04.1995**
(21) Numéro de dépôt: 91403497.0
(22) Date de dépôt: 20.12.1991
(51) Int. Cl.: B64G 1/36, G05D 1/08

(54) **Procédé de réacquisition d'attitude par reconnaissance d'étoile pour satellite stabilisé 3-axes**
Verfahren zur Wiederlangung der Lage eines dreiachs-stabilisierten Satelliten mittels Sternidentifizierung
Method of attitude recognition for a three axis stabilized satellite using star recognition

(30) Priorité: 21.12.1990 FR 9016151
(43) Date de publication de la demande: 01.07.1992
(73) Titulaire: AEROSPATIALE Société Nationale Industrielle, 75781 Paris Cédex 16 (FR)
(72) Inventeur: Flament, Patrick, F-06110 Le Cannet (FR)
(74) Mandataire: Rinuy, Santarelli

(56) Documents cités:
- EP-A- 0 174 715
- EP-A- 0 338 687
- EP-A- 0 363 243
- GB-A- 2 008 284

## Description

La présente invention concerne un mode de sauvegarde d'un satellite stabilisé 3-axes en tout ou en partie, c'est-à-dire une procédure de réacquisition d'attitude visant à permettre de ramener cette partie ou l'ensemble du satellite dans son attitude nominale de service.

Ainsi qu'on le sait, les trois axes selon lesquels on cherche à stabiliser en attitude un satellite (ou une partie de celui-ci) sont respectivement un axe dirigé vers la Terre, couramment noté Z et appelé axe de lacet, un axe perpendiculaire au plan de l'orbite, couramment noté Y et appelé axe de tangage, et un axe perpendiculaire aux deux précédents, couramment noté X et appelé axe de roulis, ces axes formant conjointement un trièdre direct (X, Y, Z). Lorsque l'orbite est équatoriale ou faiblement inclinée par rapport à l'Equateur, l'axe Y de tangage est au moins approximativement parallèle à la direction NORD-SUD et, lorsque l'orbite est circulaire, par exemple géostationnaire, l'axe de roulis est tangent à l'orbite et de même sens que le vecteur vitesse instantanée du satellite sur son orbite.

Cette invention vise tout satellite en orbite terrestre utilisant au moins un détecteur de terre pour la mesure d'angles de roulis et tangage et un détecteur d'étoile pour la mesure d'angles de roulis et lacet. Il y a donc redondance des mesures de roulis.

Les satellites en tout ou partie stabilisés 3-axes disposent en pratique :
- soit d'un moment cinétique fixe, proche de Y, obtenu, par exemple, avec une roue cinétique en tangage ou par rotation d'une partie du satellite,
- soit d'un moment cinétique orientable, proche de Y, à un degré de liberté obtenu avec, par exemple, une roue cinétique en tangage et une roue de réaction en lacet, ou bien deux roues cinétiques en V autour de l'axe de tangage et une roue de réaction en lacet, ou bien une seule roue cinétique sur pivot 1-axe dans le plan roulis/lacet,
- soit d'un moment cinétique orientable, proche de Y, à plusieurs degrés de liberté obtenu avec, par exemple, une seule roue cinétique sur pivots multiples dans le plan,
- soit d'un moment cinétique faible d'orientation quelconque (éventuellement nul) obtenu avec, par exemple, trois roues à réaction.

Des concepts de contrôle d'attitude d'un satellite utilisant un détecteur terrestre et un détecteur d'étoile sont déjà connus et font, entre autres, l'objet du brevet FR-2.522.614 du CENTRE NATIONALE D'ETUDES SPATIALES (invention de MOUILHARAT Guy, DUCHON Paul A., GUILBERT Jean-Michel A. et ROLFO André A.) pour "Configuration de satellite à orbite équatoriale à moyens solaires perfectionnés" et du brevet FR-2.637.565 de l'AEROSPATIALE (invention de MAUTE Patrick) pour "système de contrôle actif selon trois axes d'un satellite géostationnaire".

Le brevet FR-2.522.614 concerne un satellite comportant une plate-forme stabilisée en regard du Soleil grâce aux mesures d'un détecteur solaire et d'un détecteur d'étoile, et une charge utile montée rotative autour d'un axe NORD-SUD par rapport à cette plate-forme et stabilisée en regard de la Terre grâce aux mesures d'un détecteur terrestre. Les détecteurs solaire et stellaire d'une part, et le détecteur terrestre d'autre part interviennent donc dans des stabilisations distinctes de parties distinctes du satellite. Rien n'est prévu de particulier pour la sauvegarde de la mission en cas de perte d'attitude.

Le document FR-2.637.565 décrit divers modes de contrôle d'attitude (mode normal, mode de maintien à poste, mode de survie et mode de manoeuvre d'apogée) faisant intervenir des détecteurs terrestre, solaire et stellaire. Le mode de survie (ou de sauvegarde) suppose le pointage d'un axe donné du plan roulis/lacet vers le Soleil.

L'utilisation d'un tel détecteur d'étoile pour raccourcir les phases de réacquisition de l'attitude nominale d'un satellite stabilisé 3-axes, après une anomalie a également été envisagée en particulier dans le brevet EP-0.338.687 de BRITISH AEROSPACE (invention de MATTHEWS Nicholas F.) pour "Method of and apparatus for returning an earth orbiting spacecraft to an earth pointing attitude after displacement therefrom" ; cette réacquisition est conduite à partir d'une configuration dans laquelle, comme dans le document FR-2.637.565, le satellite est pointé vers le Soleil.

Traditionnellement, sur les satellites stabilisés trois-axes, la réacquisition se fait suivant la procédure suivante :
- annulation du moment cinétique par freinage des roues,
- passage en mode pointé Soleil,
- passage en mode pointé Terre,
- remise en vitesse des roues.

Le mode pointé Soleil consiste en la recherche du Soleil puis le pointage de l'un des axes du satellite vers le Soleil et mise en rotation lente du satellite autour de cet axe (typiquement 0,5°/sec). L'axe pointé vers le Soleil est généralement choisi de façon que le Soleil illumine les panneaux solaires, garantissant ainsi l'alimentation électrique du satellite donc le bon fonctionnement de ses équipements. Cela autorise le satellite à rester sans risque de longues périodes dans cette attitude, mais la mission est évidemment interrompue. L'axe de rotation choisi est donc en général distinct de l'axe du moment cinétique, ce qui oblige donc à annuler le moment cinétique du satellite avant que ce mode soit activé, sinon la précession imposée au moment cinétique entraînerait de fréquents coups de tuyères donc une consommation rédhibitoire d'ergol.

Le mode pointé Terre consiste en la recherche de la terre par rotation du satellite autour d'un axe du satellite dirigé vers le Soleil ; cet axe, en pratique différent de l'axe en mode pointé Soleil, est choisi de façon que le champ de vue du détecteur Terre intercepte obligatoirement la Terre. Une fois la Terre repérée, un retournement du satellite autour de l'axe de lacet peut être éventuellement commandé pour amener le satellite dans son attitude de référence.

Lorsque l'on suit ce type de procédure, la réacquisition de l'attitude du satellite dure au minimum une heure et peut même durer plusieurs heures, voire dizaines d'heures, si la perte d'attitude a eu lieu dans la zone de l'orbite où il n'est pas possible d'avoir à la fois le Soleil et la Terre dans les champs de vue de leurs détecteurs respectifs ou si le personnel de la station de contrôle du satellite tarde à prendre une décision.

Ce type de procédé, couramment utilisé pour sa simplicité de conception et sa fiabilité fait l'objet entre autres du document FR-2407860 pour lequel :
- la durée de réacquisition est de 1 à 8 heures minimum,
- la procédure de recherche de la Terre comporte les étapes suivantes :
   . arrêt des roues pour annuler le moment cinétique,
   . rotation autour de X pour chercher le Soleil,
   . rotation autour de Y pour amener le Soleil face à +X
   . rotation autour de X face au Soleil en attendant la commande de la recherche Terre (à ce niveau le séquencement se fait manuellement depuis le sol et la durée de la réacquisition dépend du délai de décision des opérateurs du sol,
   . rotation autour d'un axe intermédiaire face au Soleil,
   . éventuellement rotation autour de Z suivant la position du satellite sur son orbite et les senseurs utilisés,
   . remise en vitesse des roues par séquencement manuel,
- aucun détecteur d'étoile n'est prévu.

Pour diminuer la durée de la réacquisition, le brevet FR-2649809 envisage, en partant du mode pointé Soleil, de rechercher la Terre à l'aide des mesures d'un senseur solaire supplémentaire. Cette procédure permet de réaliser une réacquisition en passant par le mode pointé Soleil en n'importe quel point de l'orbite donc de limiter sa durée à une heure environ à condition que le personnel de la station de contrôle du satellite soit disponible.

Un résultat identique est obtenu par le brevet EP-0338687 qui utilise un senseur d'étoile. Ce brevet propose de rechercher l'étoile suivant la même procédure que la recherche Terre que le brevet FR-2407860. L'intérêt réside comme pour le brevet FR-2649809 dans le fait que l'acquisition Terre peut être faite en n'importe quel point de l'orbite. Dans ces deux cas la recherche Terre ne peut être envisagée qu'à partir du mode pointé Soleil.

L'invention, au contraire de ces trois brevets, propose de réaliser la réacquisition de façon plus rapide (15 à 30 minutes maximum au lieu de 1 heure minimum), automatique (pas d'intervention du sol pour charger dans le logiciel de bord l'axe de rotation qui permet de trouver la Terre ou l'étoile), sans utiliser de senseur solaire, sans intervention manuelle du sol pour assurer le séquencement de la réacquisition, sans algorithme compliqué de reconnaissance d'étoile, en conservant le moment cinétique donc pour une consommation d'ergol moindre (les roues restent à la même vitesse, il n'est donc pas nécessaire d'utiliser les tuyères pour contrer les couples des roues lors de leur freinage puis de leur remise en vitesse).

Des concepts de réacquisition rapide et économique en ergols ont par ailleurs été utilisés sur des satellites non munis de détecteur d'étoile. En particulier, on peut citer ceux de la série TVSAT/TDF ou encore le brevet FR-2.620.243 de MESSERSCHMITT-BOLKOW-BLOHM GmBh (invention de M. BRUDERLE Ernst) pour "Procédé de réacquisition de la position de tangage d'un satellite terrestre" ; mais ce procédé se limite, comme son titre l'indique, à la réacquisition de l'attitude d'un satellite dans le plan roulis/lacet seulement, l'orientation de l'axe de tangage étant supposée être restée correcte.

L'invention a pour objet de doter un satellite destiné à être stabilisé 3-axes d'un mode de sauvegarde automatique (sans intervention du sol) qui permette, dans la plupart des cas de pertes d'attitude (pas seulement dans le plan roulis/lacet), de ramener le satellite dans son attitude nominale dans un temps bien plus court (typiquement moins de 30 mn) que selon les procédés connus sans pénalité notable en coût, en masse ou en fiabilité et moyennant une consommation modérée en ergols ; en fait, l'invention vise une procédure rapide de réacquisition d'attitude qui présente une probabilité de réussite suffisamment élevée pour que le risque d'avoir à passer par une attitude intermédiaire où le satellite est pointé vers le Soleil (procédure coûteuse en temps et/ou en ergols) devienne négligeable en pratique.

Elle propose à cet effet un procédé de réacquisition d'attitude pour un satellite dont au moins une partie est stabilisée autour d'un axe de roulis, lacet et tangage et est équipée au moins de moyens détecteurs de vitesse en roulis, tangage et lacet, d'un détecteur terrestre, d'un détecteur stellaire, adapté à détecter une étoile de référence, distincte du Soleil, de position et de magnitude connues, des moyens et logiciels de contrôle et de changement d'attitude connectés aux détecteurs et adaptés à effectuer un mode normal de contrôle d'attitude, un mode d'acquisition Soleil et des opérations de capture pour amener la Terre ou l'Etoile dans une position nominale dans le détecteur respectif, procédé selon lequel, après avoir constaté une perte d'attitude :
- on teste si le détecteur terrestre détecte la Terre (test 1) et si le détecteur d'étoile détecte une étoile de magnitude au moins approximativement égale à la magnitude connue de l'étoile de référence (test 2) et :
   * cas a : si les tests 1 et 2 sont positifs, on contrôle en roulis, lacet et tangage l'attitude du satellite en sorte de capturer la Terre et ladite étoile, et on teste la cohérence au cours du temps des informations de roulis fournies par les détecteurs de Terre et d'étoile : si le test de cohérence est positif, on passe en un mode normal de contrôle d'attitude, sinon on suit le traitement du cas b ;
   * cas b : si le test 1 est positif, alors que le test 2 est négatif, on contrôle en roulis et en tangage l'attitude du satellite en sorte de capturer la Terre et on commande en rotation le satellite autour de l'axe de lacet jusqu'à vérification du test 2 ; on contrôle l'attitude du satellite pour capturer ladite étoile et on procède au test de cohérence prévu dans le traitement du cas a ;
   * cas c : si le test 1 est négatif alors que le test 2 est positif, on contrôle en roulis et lacet l'attitude du satellite en sorte de capturer l'étoile détectée, on inverse la vitesse de rotation en tangage pendant au plus un temps donné ; si le test 1 devient positif, on contrôle l'attitude du satellite en sorte de capturer la Terre et ladite étoile et on procède au test de cohérence prévu dans le traitement du cas ; si le test 1 n'est pas positif à la fin du temps donné, on passe en mode d'acquisition du Soleil ;
   * cas d : si les tests 1 et 2 sont négatifs, on annule les vitesses en roulis et lacet, et on inverse la vitesse en tangage pendant au plus un temps donné; si le test 1 devient positif, on fait le test 2; si le test 2 est resté négatif, on suit le traitement du cas b, sinon on procède au test de cohérence prévu dans le traitement du cas a ; si le test 1 n'est pas positif à la fin du temps donné, on passe en mode d'acquisition du Soleil.

On entend ici par "capturer" le contrôle de l'attitude du satellite propre à amener la Terre ou l'étoile à sa position nominale dans son détecteur.

Selon d'autres dispositions de l'invention, éventuellement combinées :
- l'étoile de référence est à moins de 40° de la perpendiculaire au plan de l'orbite,
- l'étoile de référence a une magnitude qui lui est spécifique,
- l'étoile de référence est identique tout au long de la mission du satellite,
- l'étoile de référence est choisie, en fonction d'une mission ponctuelle ou de l'orientation du satellite, dans un groupe d'étoiles prédéterminées,
- l'étoile de référence est choisie dans l'hémisphère NORD,
- l'étoile de référence est l'Etoile Polaire,
- l'étoile de référence est choisie dans l'hémisphère SUD,
- l'étoile de référence est l'Etoile CANOPUS,
- le satellite se trouve sur une orbite ayant une inclinaison d'au plus 15° par rapport à l'Equateur,
- l'orbite du satellite est géosynchrone,
- l'orbite du satellite est héliosynchrone.

Des objets, caractéristiques et avantages de l'invention ressortent de la description qui suit, donnée à titre d'exemple non limitatif, en regard des dessins annexés sur lesquels :
- la figure 1 est un schéma rappelant les notions de repère inertiel (Xi, Yi, Zi) et de repère orbital (Xo, Yo, Zo) ;
- la figure 2 est un schéma rappelant les notions de roulis, tangage et lacet ;
- la figure 3 est une vue schématique d'un satellite sur son orbite ; et
- la figure 4 est un organigramme d'un mode de sauvegarde conforme à l'invention.

Il est tout d'abord rappelé que pour tout satellite en orbite autour de la Terre, on définit un trièdre orthonormé direct Xi Yi Zi dont les axes sont fixes par rapport à l'Espace inertiel avec, par exemple Xi dirigé vers le point vernal γ, Zi vers le Nord géographique et Yi complétant le trièdre.

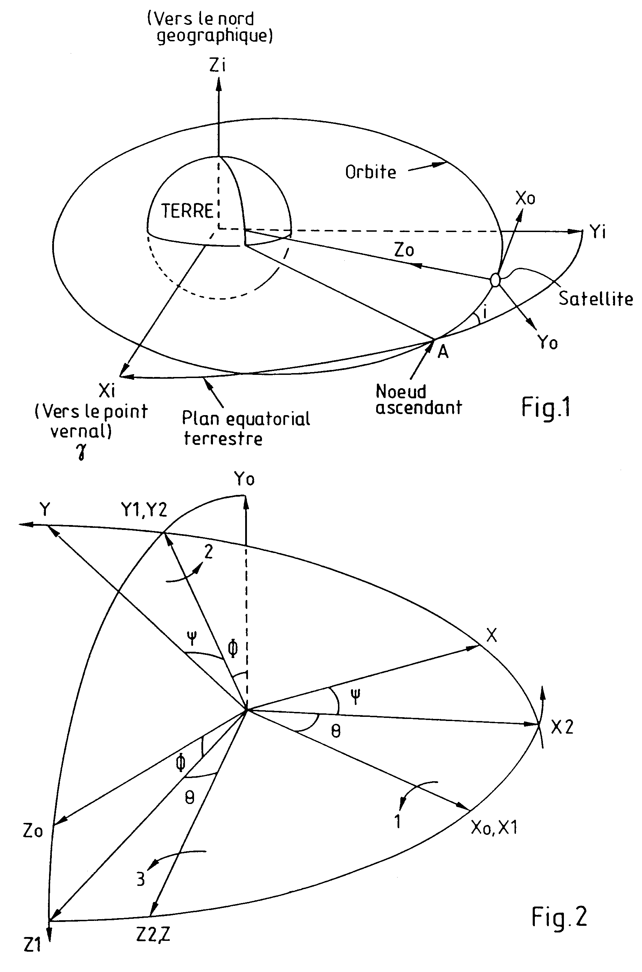

Ensuite on définit par ailleurs au centre de gravité du satellite un repère Xo Yo Zo couramment appelé trièdre orbital local et dans lequel Zo est dirigé vers le centre de la Terre, Yo est parallèle à la normale orbitale négative et Xo complétant le trièdre est dirigé du même côté que le vecteur vitesse linéaire de l'orbite. La figure 1 montre la géométrie des repères (Xi Yi Zi) et (Xo Yo Zo) dans le cas d'un satellite en orbite terrestre de faible inclinaison sur l'Equateur.

La stabilisation du satellite suivant trois axes consiste à maintenir un repère X Y Z lié au satellite dans une attitude donnée fixe par rapport au repère de référence Xo Yo Zo (cette attitude fixe pouvant éventuellement être redéfinie au cours de la vie du satellite).

Trois angles : phi φ, theta Θ et psi ψ permettent de définir à chaque instant la position du repère-satellite X Y Z par rapport au repère Xo Yo Zo et ce, par exemple, comme l'indique la figure 2.

Les dénominations et conventions classiques sont les suivantes :
- φ: est appelé angle de roulis et correspond à l'erreur de pointage autour de l'axe de référence Xo
- Θ: est appelé angle de tangage et définit l'erreur de pointage autour de l'axe de référence Yo,
- ψ: est appelé angle de lacet et correspond à l'erreur d'attitude autour de l'axe de référence Zo,
- X: est appelé axe de roulis,
- Y: est appelé axe de tangage,
- Z: est appelé axe de lacet.

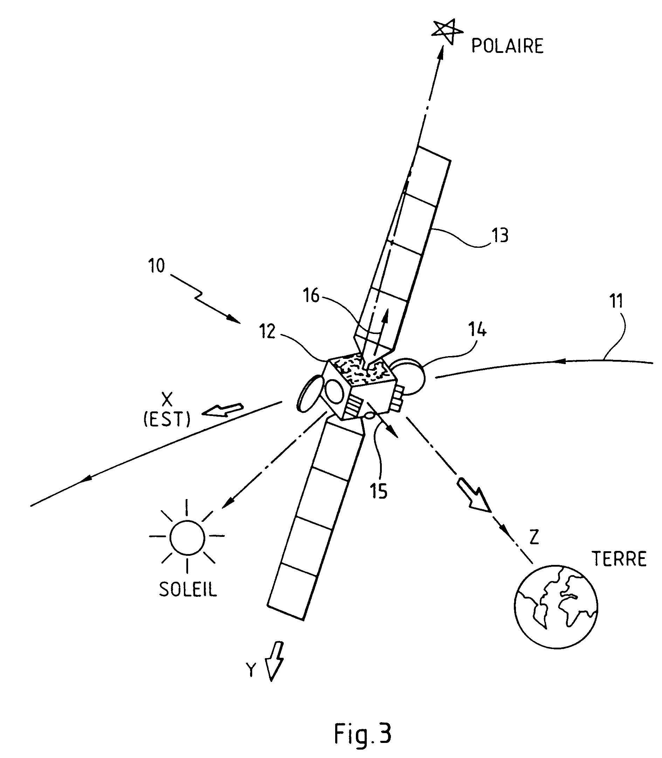

La figure 3 illustre schématiquement un satellite 10 circulant sur son orbite 11, comportant de manière classique un corps de satellite 12, un générateur solaire repéré 13 dans son ensemble, des équipements (antennes ...) repérés 14, un détecteur terrestre schématisé par la flèche 15 et un détecteur stellaire, ici disposé sur la face NORD du corps de satellite en sorte de pouvoir détecter l'Etoile Polaire. En variante non représentée, le détecteur stellaire peut au contraire être pointé vers le SUD, pour pouvoir détecter par exemple l'Etoile CANOPUS. La structure générale du satellite, ne faisant pas partie de l'invention, ne sera pas détaillée plus avant.

Dans l'exemple considéré, le satellite comporte en outre des gyromètres (non représentés) adaptés à repérer les vitesses de rotation du satellite autour des axes de roulis, tangage, lacet.

Le détecteur terrestre 15 permet de déterminer une mesure des angles de roulis et de tangage.

Le détecteur d'étoile 16 permet de déduire une mesure des angles de roulis et lacet. Le calcul de ces mesures nécessitant en général une information sur l'angle de tangage qui peut être obtenue, soit par le détecteur terrestre, soit par l'intégration des informations des gyromètres autour de l'axe Y.

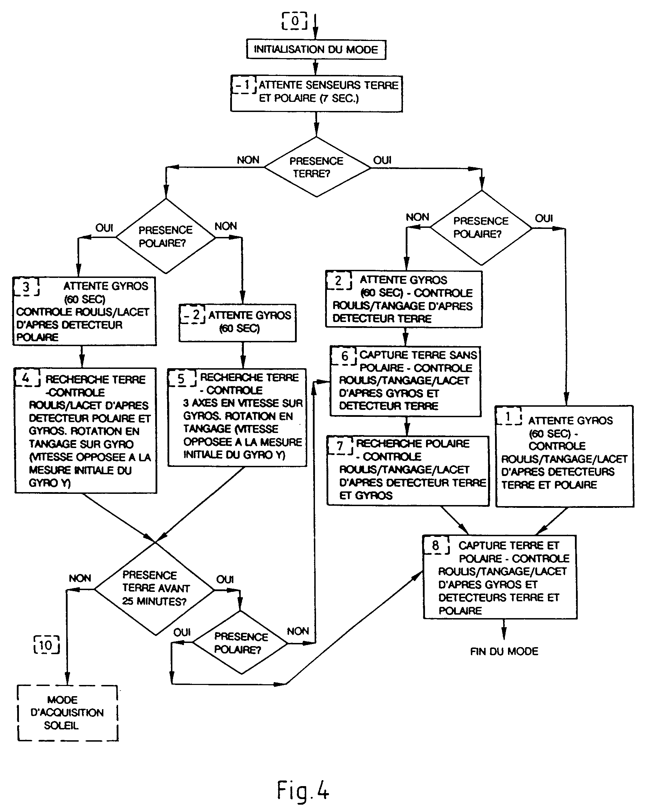

On se place dans l'hypothèse où, suite à une anomalie quelconque de fonctionnement, le satellite a perdu son attitude. La logique de réacquisition, proposée à titre d'exemple dans la figure 4, décrit la façon dont les opérations de réacquisition peuvent s'enchaîner, de façon automatique ou manuelle. Après avoir éventuellement allumé les détecteurs (Terre, étoile, gyromètres...) nécessaires (bloc -1), on teste si le détecteur 15 détecte la Terre et si le détecteur 16 détecte une étoile ayant la même magnitude que l'étoile de référence (ici l'Etoile Polaire) ; quatre cas se présentent :
a) - la Terre et une étoile (de magnitude correspondant à celle recherchée) sont dans le champ de vue de leur détecteur respectif. Dans ce cas, les opérations sont les suivantes :
   . contrôle actif des angles (bloc 1) : de roulis d'après les informations du détecteur de Terre (ou d'étoile), de tangage d'après les informations du détecteur de Terre et de lacet sur les informations du détecteur d'étoile ;
   . vérification que l'étoile observée (dont la magnitude correspond à celle de l'étoile recherchée) est bien celle de référence par vérification (blocs 8 et 9) de la cohérence des mesures de roulis déduites respectivement des mesures des détecteurs de Terre et d'étoile (bloc 8). Si les mesures de roulis des deux détecteurs peuvent temporairement paraître cohérentes alors qu'en réalité l'étoile observée n'est pas celle de référence, cette cohérence disparaît rapidement (quelques minutes pour un satellite géostationnaire) au fur et à mesure de la rotation du satellite sur son orbite qui modifie la géométrie du triangle formé par la Terre, le satellite et l'étoile de référence ; si cette cohérence se maintient dans le temps (par exemple 5 minutes) on admet que l'attitude est réacquise.
   . si cette vérification de cohérence montre au contraire que l'étoile observée n'est pas celle de référence, on décide de suivre la phase de recherche d'étoile décrite ci-dessous.
b) - la Terre est dans le champ de vue de son détecteur et l'étoile de référence n'est pas dans le champ de vue de son détecteur (soit il n'y a pas d'étoile de la magnitude voulue, soit la phase a) a démontré que cette étoile n'était pas la bonne). Dans ce cas, les opérations sont les suivantes :
   . contrôle actif (bloc 2) des angles de roulis et de tangage d'après les informations du détecteur de Terre et asservissement à 0 (bloc 6) de la vitesse de rotation en lacet mesurée par le gyromètre en lacet ;
   . recherche de l'étoile de référence (bloc 7) (si elle n'a pas été détectée depuis le début de ce cas b)). Deux façons de procéder sont envisagées pour cette recherche :
      - cas des satellites à moment cinétique faible d'orientation quelconque : on commande une rotation du satellite autour de l'axe de lacet en sens inverse de la vitesse initiale observée ; dès qu'une étoile de magnitude proche de celle de référence se trouve dans le champ de vue du détecteur, on pointe le satellite en lacet sur cette étoile et on procède à l'identification de cette étoile suivant la méthode décrite pour le cas a),
      - cas des satellites à moment cinétique proche de l'axe de tangage Y : on commande une rotation du satellite autour de l'axe de lacet, le sens de rotation étant indiqué par le signe de l'erreur de roulis. En effet, ainsi qu'on le sait, sur un satellite muni d'un moment cinétique proche de Y, le moment cinétique reste fixe dans un repère inertiel alors que le repère orbital local tourne à raison d'un tour sur orbite. De ce fait, une erreur de lacet se transforme en erreur de roulis au fur et à mesure de la rotation du satellite sur son orbite et l'erreur roulis détectée est représentative de l'erreur lacet si elle est importante. Dès qu'une étoile de magnitude proche de celle de référence se trouve dans le champ de vue du détecteur d'étoile, on pointe le satellite en lacet sur cette étoile et on procède à l'identification de cette étoile suivant la méthode décrite pour le cas a).
c) - une étoile est dans le champ de vue de son détecteur et la Terre n'est pas dans le champ de vue de son détecteur. Dans ce cas, les opérations sont les suivantes :
   . contrôle (bloc 3) des angles de roulis et de lacet d'après les informations du détecteur d'étoile et asservissement à 0 (bloc 3) de la vitesse de rotation en tangage mesurée par le gyromètre en tangage ;
   . recherche de la Terre (bloc 4) (si elle n'a pas été détectée depuis le début du traitement de ce cas c) par rotation du satellite autour de l'axe de tangage en sens inverse de la vitesse initiale observée ; dès que la Terre se trouve dans le champ de vue du détecteur, on pointe le satellite en tangage sur la Terre et on procède à l'identification de l'étoile observée suivant la méthode décrite dans le cas a) ;
d) - ni la terre ni aucune étoile ne sont dans le champ de vue de leur détecteur ; dans ce cas, les opérations sont les suivantes (bloc 5) :
   . asservissement à 0 des vitesses de rotation en roulis, tangage et lacet mesurées par les divers gyromètres ;
   . recherche de la Terre (si elle n'a pas été détectée depuis le début du traitement de ce cas d) ) par rotation du satellite autour de l'axe de "tangage" apparent en sens inverse de la vitesse initiale observée ; dès que la Terre se trouve dans le champ de vue du détecteur, on pointe le satellite en tangage sur la Terre et on recherche l'étoile de référence suivant la méthode décrite pour le cas b).

Ces deux dernières phases ne sont pas assurées de réussir si l'attitude du satellite a été fortement perturbée. Cependant, l'expérience montre que l'existence d'un moment cinétique non nul suivant Y empêche dans la plupart des cas les angles de roulis et lacet d'être trop éloignés de leur valeur nominale, ce qui assure la réussite de ces phases ; par ailleurs, si le satellite n'a pas de moment cinétique, la manoeuvre mérite d'être tentée à cause du gain de temps qu'elle permet en cas de réussite, et du fait que la probabilité de réussite est significative.

Toutefois, à défaut de détection de la Terre dans les cas c) et d) après un temps donné (par exemple 25 minutes) on commande un mode classique d'acquisition Soleil. Le fait d'avoir mis en oeuvre l'invention ne se traduit que par un retard de quelques 30 mn, beaucoup plus faible que la durée totale nécessaire pour ce pointage Soleil puis la réacquisition de l'attitude nominale.

En effet, la rapidité de ce mode de sauvegarde tient au fait qu'il est facilement automatisable. A l'opposé, le passage du mode pointé Soleil au mode normal est difficile à automatiser car il nécessite la connaissance de la position du satellite par rapport à la Terre et au Soleil. Le calcul de cette position étant généralement réalisé au sol. L'intervention d'une station de contrôle du satellite étant nécessaire, la rapidité de la réacquisition dépend dans ce cas en grande partie de la disponibilité des personnels affectés à ces opérations.

Le contrôle actif (et des opérations de "capture" de la Terre et de l'étoile consistant à réduire à 0 les écarts observés) intervenant dans ces divers cas est, pour la rapidité de la réacquisition d'attitude, commandé par des actionneurs puissants, tels que des tuyères (par exemple les tuyères destinées au contrôle d'orbite).

Il va de soi que la description qui précède n'a été proposée qu'à titre d'exemple non limitatif et que de nombreuses variantes peuvent être proposées par l'homme de l'art sans sortir du cadre de l'invention.

Ainsi, la recherche de l'Etoile Polaire utilisant l'erreur de roulis pour la commande en lacet peut être appliquée au satellite stabilisé par rotation autour de l'axe Y. Le pointage autour de l'axe Z du repère orbital local de l'axe Y du satellite étant assuré sur informations de l'angle de dépointage de l'axe de rotation Y autour de l'axe X du repère orbital local.

## Revendications

1. Procédé de réacquisition d'attitude pour un satellite dont au moins une partie est stabilisée autour d'un axe de roulis, lacet et tangage et est équipée au moins de moyens détecteurs de vitesse en roulis, tangage et lacet, d'un détecteur terrestre (15), d'un détecteur stellaire (16), adapté à détecter une étoile de référence distincte du Soleil, de position et de magnitude connues, des moyens et logiciels de contrôle et de changement d'attitude connectés aux détecteurs et adaptés à effectuer un mode normal de contrôle d'attitude, un mode d'acquisition Soleil et des opérations de capture pour amener la Terre ou l'Etoile dans une position nominale dans le détecteur respectif, procédé selon lequel, après avoir constaté une perte d'attitude :
- on teste si le détecteur terrestre détecte la Terre (test 1) et si le détecteur d'étoile détecte une étoile de magnitude au moins approximativement égale à la magnitude connue de l'étoile de référence (test 2) et :
* cas a : si les tests 1 et 2 sont positifs, on contrôle en roulis, lacet et tangage l'attitude du satellite en sorte de capturer la Terre et ladite étoile, et on test la cohérence au cours du temps des informations de roulis fournies par les détecteurs de Terre et d'étoile : si le test de cohérence est positif, on passe en un mode normal de contrôle d'attitude, sinon on suit le traitement du cas b ;
* cas b : si le test 1 est positif, alors que le test 2 est négatif, on contrôle en roulis et en tangage l'attitude du satellite en sorte de capturer la Terre et on commande en rotation le satellite autour de l'axe de lacet jusqu'à vérification du test 2 ; on contrôle l'attitude du satellite pour capturer ladite étoile et on procède au test de cohérence prévu dans le traitement du cas a ;
* cas c : si le test 1 est négatif alors que le test 2 est positif, on contrôle en roulis et lacet l'attitude du satellite en sorte de capturer l'étoile détectée, on inverse la vitesse de rotation en tangage pendant au plus un temps donné ; si le test 1 devient positif, on contrôle l'attitude du satellite en sorte de capturer la Terre et ladite étoile et on procède au test de cohérence prévu dans le traitement du cas ; si le test 1 n'est pas positif à la fin du temps donné, on passe en mode d'acquisition du Soleil ;
* cas d : si les tests 1 et 2 sont négatifs, on annule les vitesses en roulis et lacet, et on inverse la vitesse en tangage pendant au plus un temps donné ; si le test 1 devient positif, on fait le test 2 ; si le test 2 est resté négatif, on suit le traitement du cas b, sinon on procède au test de cohérence prévu dans le traitement du cas a ; si le test 1 n'est pas positif à la fin du temps donné, on passe en mode d'acquisition du Soleil.

2. Procédé selon la revendication 1, caractérisé en ce que, dans le cas b, on commande en rotation le satellite autour de l'axe de lacet en sens inverse de la vitesse initiale détectée.

3. Procédé selon la revendication 1, caractérisé en ce que le satellite étant à moment cinétique proche de l'axe de tangage, dans le cas b on commande en rotation le satellite autour de l'axe de lacet dans un sens de même signe que l'erreur de roulis.

4. Procédé selon l'une quelconque des revendications 1 à 3, caractérisé en ce qu'on commande les rotations et les opérations de capture au moyen de tuyère.

5. Procédé selon l'une quelconque des revendications 1 à 4, caractérisé en ce que l'étoile de référence est à moins de 40° de la perpendiculaire au plan de l'orbite.

6. Procédé selon l'une quelconque des revendications 1 à 5, caractérisé en ce que l'étoile de référence a une magnitude qui lui est spécifique.

7. Procédé selon l'une quelconque des revendications 1 à 6, caractérisé en ce que l'étoile de référence est identique tout au long de la mission du satellite.

8. Procédé selon l'une quelconque des revendications 1 à 6, caractérisé en ce que l'étoile de référence est choisie, en fonction d'une mission ponctuelle ou de l'orientation du satellite, dans un groupe d'étoiles prédéterminées.

9. Procédé selon l'une quelconque des revendications 1 à 8, caractérisé en ce que l'étoile de référence est choisie dans l'hémisphère NORD.

10. Procédé selon la revendication 9, caractérisé en ce que l'étoile de référence est l'Etoile Polaire.

11. Procédé selon l'une quelconque des revendications 1 à 8, caractérisé en ce que l'étoile de référence est choisie dans l'hémisphère SUD.

12. Procédé selon la revendication 11, caractérisé en ce que l'étoile de référence est l'Etoile CANOPUS.

13. Procédé selon l'une quelconque des revendications 1 à 12, caractérisé en ce que le satellite se trouve sur un orbite ayant une inclinaison d'au plus 15° par rapport à l'Equateur.

14. Procédé selon l'une quelconque des revendications 1 à 13, caractérisé en ce que l'orbite du satellite est géosynchrone.

15. Procédé selon l'une quelconque des revendications 1 à 13, caractérisé en ce que l'orbite du satellite est héliosynchrone.

## Claims

1. Attitude reacquisition method for a satellite at least part of which is stabilised about roll, yaw and pitch axes and is equipped with at least roll, pitch and yaw speed sensors, a terrestrial sensor (15) and a star sensor (16) adapted to sense a reference star of known position and magnitude, attitude change and control means and software connected to the sensors and adapted to implement a normal attitude control mode, a Sun acquisition mode and capture operations to bring the Earth or the star into a nominal position in the respective sensor wherein, after loss of attitude is confirmed:
- a test is executed to determine if the terrestrial sensor is sensing the Earth (test 1) and if the star sensor is sensing a star of magnitude at least approximately equal to the known magnitude of the reference star (test 2) and:
* phase a: if the results of tests 1 and 2 are positive, the satellite attitude is controlled in roll, yaw and pitch to capture the Earth and said star and the roll information supplied by the Earth and star sensors is tested for consistency: if the result of the consistency test is positive a normal attitude control mode is selected; if not processing continues with phase (b) below;
* phase b: if the result of test 1 is positive and the result of test 2 is negative the attitude of the satellite is controlled in roll and in pitch to capture the Earth and the satellite is caused to rotate about the yaw axis until the result of test 2 is positive; the attitude of the satellite is controlled to capture said star and the consistency test of phase (a) is carried out;
* phase c: if the result of test 1 is negative and the result of test 2 is positive, the attitude of the satellite is controlled in roll and yaw to capture the sensed star and the pitch rotation speed is reversed for at most a given time; if the result of test 1 is then positive, the attitude of the satellite is controlled to capture the Earth and said star and the consistency test of phase (a) is carried out; if the result of test 1 is not positive at the end of the given time, Sun acquisition mode is selected;
* phase d: if the results of tests 1 and 2 are negative the roll and yaw speeds are cancelled and the pitch speed is reversed for at most a given time; if the result of test 1 becomes positive test 2 is run; if the result of test 2 remains negative the phase (b) processing continues; otherwise the consistency test of phase (a) is carried out; if the result of test 1 is not positive at the end of the given time, Sun acquisition mode is selected.

2. Method according to claim 1 characterised in that, in phase (b), the satellite is caused to rotate about the yaw axis in the reverse direction to the detected initial speed.

3. Method according to claim 1 characterised in that, in phase (b), the satellite has a kinetic moment near the pitch axis and is caused to rotate in a direction of opposite sign to the roll error.

4. Method according to any one of claims 1 to 3 characterised in that rotation and capture are controlled by means of thrusters.

5. Method according to any one of claims 1 to 4 characterised in that the reference star is less than 40° from the normal to the orbital plane.

6. Method according to any one of claims 1 to 5 characterised in that the reference star has a magnitude specific to it.

7. Method according to any one of claims 1 to 6 characterised in that the reference star is the same throughout the mission of the satellite.

8. Method according to any one of claims 1 to 6 characterised in that the reference star is selected from a predetermined star group to suit an individual mission or the orientation of the satellite.

9. Method according to any one of claims 1 to 8 characterised in that the reference star is chosen in the NORTHERN hemisphere.

10. Method according to claim 9 characterised in that the reference star is the Pole Star.

11. Method according to any one of claims 1 to 8 characterised in that the reference star is chosen in the SOUTHERN hemisphere.

12. Method according to claim 11 characterised in that the reference star is CANOPUS.

13. Method according to any one of claims 1 to 12 characterised in that the satellite is in an orbit inclined at not more than 15° to the plane of the equator.

14. Method according to any one of claims 1 to 13 characterised in that the satellite orbit is a geosynchronous orbit.

15. Method according to any one of claims 1 to 13 characterised in that the satellite orbit is a heliosynchronous orbit.

## Patentansprüche

1. Verfahren zur Wiedererlangung der Lage für einen Satelliten, von dem mindestens ein Teil um eine Roll-, Gier- und Nickachse stabilisiert ist und mindestens mit Mitteln zur Erfassung der Roll-, Nick- und Giergeschwindigkeit, einem Erddetektor (15), einem Sterndetektor (16),der so ausgelegt ist, daß er einen von der Sonne unterschiedenen Bezugsstern bekannter Position und Größe erfassen kann, Mitteln und Softwares zur Lagesteuerung und -änderung ausgerüstet ist, die an die Detektoren angeschlossen sind und so ausgelegt sind, daß sie einen normalen Lagesteuerungsmodus, einen Sonnenerfassungsmodus und Einfangoperationen ausführen können, um die Erde oder den Stern in eine Nennposition in dem jeweiligen Detektor zu bringen, Verfahren, gemäß welchem man nach Feststellung eines Lageverlustes, folgendes vornimmt:
- man testet, ob der Erddetektor die Erde erfaßt (Test 1) und ob der Sterndetektor einen Stern erfaßt, dessen Größe mindestens annähernd gleich der bekannten Größe des Bezugssterns ist (Test 2) und:
* Fall a): wenn die Tests 1 und 2 positiv sind, steuert man die Lage des Satelliten in Rollen, Gieren und Nicken so, daß die Erde und dieser Stern eingefangen werden, und testet die Kohärenz im Lauf der Zeit der von den Erd- und Sterndetektoren gelieferten Rollinformationen: wenn der Kohärenztest positiv ist, geht man auf den normalen Lagesteuerungsmodus über, andernfalls folgt man der Behandlung von Fall b);
* Fall b): wenn der Test 1 positiv ist, während der Test 2 negativ ist, steuert man die Lage des Satelliten in Rollen und Nicken so, daß die Erde eingefangen wird, und versetzt den Satelleiten um die Gierachse in Drehung bis zur Bestätigung des Tests 2; man steuert die Lage des Satelliten, um diesen Stern einzufangen und nimmt den in der Behandlung von Fall a) vorgesehenen Kohärenztest vor;
* Fall c): wenn der Test 1 negativ ist, während der Test 2 positiv ist, steuert man die Lage des Satelliten in Rollen und Gieren so, daß der erfaßte Stern eingefangen wird, kehrt die Nickdrehgeschwindigkeit während höchstens einer gegebenen Zeit um; wenn der Test 1 positiv wird, steuert man die Lage des Satelliten so, daß die Erde und dieser Stern eingefangen werden, und nimmt den in der Behandlung des Falls vorgesehenen Kohärenztest vor; wenn der Test 1 am Ende der gegebenen Zeit nicht positiv ist, geht man auf den Modus zur Erfassung der Sonne über;
* Fall d) wenn die Tests 1 und 2 negativ sind, annuliert man Roll- und Giergeschwindigkeiten und kehrt die Nickgeschwindigkeit während höchstens einer gegebenen Zeit um; wenn der Test 1 positiv wird, macht man den Test 2; wenn der Test 2 negativ geblieben ist, folgt man der Behandlung des Falls b), andernfalls nimmt man den in der Behandlung von Fall a) vorgesehenen Kohärenztest vor; wenn der Test 1 am Ende der gegebenen Zeit nicht positiv ist, geht man auf den Modus der Erfassung der Sonne über.

2. Verfahren nach Anspruch 1, dadurch gekennzeichnet, daß man im Fall b) den Satelliten um die Gierachse in der umgekehrten Richtung der erfassten Anfangsgeschwindigkeit in Drehung versetzt.

3. Verfahren nach Anspruch 1, dadurch gekennzeichnet, daß man, wenn der Satellit mit kinetischem Moment nahe der Nickachse ist, im Fall b) die Drehung des Satelliten um die Gierachse in einer Richtung mit demselben Vorzeichen wie der Rollfehler versetzt.

4. Verfahren nach einem der Ansprüche 1 bis 3, dadurch gekennzeichnet, daß man die Drehungen und Einfangoperationen mit Hilfe von Düsen bewirkt.

5. Verfahren nach einem der Ansprüche 1 bis 4, dadurch gekennzeichnet, daß der Bezugsstern in mindestens 40° von der Senkrechten zur Ebene des Orbits ist.

6. Verfahren nach einem der Ansprüche 1 bis 5, dadurch gekennzeichnet, daß Bezugsstern eine Größe hat, die ihm spezifisch ist.

7. Verfahren nach einem der Ansprüche 1 bis 6, dadurch gekennzeichnet, daß der Bezugsstern während der ganzen Mission des Satelliten identisch ist.

8. Verfahren nach einem der Ansprüche 1 bis 6, dadurch gekennzeichnet, daß der Bezugsstern in Abhängigkeit von einer punktuellen Mission oder der Ausrichtung des Satelliten in einer Gruppe von vorbestimmten Sternen ausgewählt wird.

9. Verfahren nach einem der Ansprüche 1 bis 8, dadurch gekennzeichnet, daß der Bezugsstern in der NORD-Hemisphäre gewählt wird.

10. Verfahren nach Anspruch 9, dadurch gekennzeichnet, daß der Bezugsstern der Polarstern ist.

11. Verfahren nach einem der Ansprüche 1 bis 8, dadurch gekennzeichnet, daß der Bezugsstern in der SÜD-Hemisphäre gewählt wird.

12. Verfahren nach Anspruch 11, dadurch gekennzeichnet, daß der Bezugsstern der Stern CANOPUS ist.

13. Verfahren nach einem der Ansprüche 1 bis 12, dadurch gekennzeichnet, daß der Satellit sich auf einem Orbit befindet, der eine Neigung von höchstens 15° bezüglich des Äquators hat.

14. Verfahren nach einem der Ansprüche 1 bis 13, dadurch gekennzeichnet, daß der Orbit des Satelliten geosynchron ist.

15. Verfahren nach einem der Ansprüche 1 bis 13, dadurch gekennzeichnet, daß der Orbit des Satelliten heliosynchron ist.
